# EUROPEAN PATENT APPLICATION

(11) **EP 2 797 066 A1**
(43) Date of publication of application: **29.10.2014**
(21) Application number: 13188297.9
(22) Date of filing: 11.10.2013

(54) **Intra-oral anatomy training device**

(30) Priority: 11.10.2012 US 201261712680 P
(71) Applicant: Dental Equipment, LLC D/B/A Pelton & Crane, Charlotte, NC 28273 (US); University of The Pacific, San Francisco, CA 94115 (US)
(72) Inventor: Hemmer, Nathan, Newberg, OR Oregon 97132 (US); Budnik, Jason, Lake Zurich, IL Illinois 60047 (US); Kachalia, Parag Ramaniklal, San Ramón, CA California 94582 (US); Vallee, Jessie Virginia, San Francisco, CA California 94107 (US); Nadershahi, Nader Aghaali, San Rafael, CA California 94901 (US); Carlig, Poppy Montana-Marie, Richmond, CA California 94805 (US)
(74) Representative: ABG Patentes, S.L.

(57) **Abstract**

Disclosed herein are typodont models and dental mannequins that provide a highly accurate representation of the human or non-human animal oral anatomy. The model embodiments disclosed herein provide life-like materials and various features of the oral cavity not found in typical typodont models. Additionally, the typodont models disclosed herein simulate many challenging conditions that arise in dental procedures when performed on live subjects such as, for example, clouding of instruments including mirrors used to view the interior portion of the oral cavity, oral fluid interfering with the work area, and other real-life interferences and complications. The ability to mimic the oral cavity with as much accuracy as possible is beneficial to the dental field for both practitioners as well as patients.

## Description

### BACKGROUND

The intricacies of modem dental techniques make desirable for training and demonstration purposes the availability of life-like, accurate, dental models. These models may serve to enhance the education of those in the dental field by providing a geometrically accurate dental model for practice and training purposes. Many dental procedures require a certain level of proficiency in order to achieve optimal results.

Typical typodont models and dental mannequins fail to adequately and accurately represent the human or non-human animal oral anatomy. Moreover, in addition to the non-life like materials used in the typical typodont and dental models, various features of the oral cavity are not presented. Additionally, many challenging conditions arise in dental procedures when performed on live subjects such as, for example, clouding of instruments including mirrors used to view the interior portion of the oral cavity, oral fluid interfering with the work area, and other real-life interferences and complications, which cannot easily be replicated in training models, mannequins, devices, or typodonts. The ability to mimic the oral cavity with as much accuracy as possible is beneficial to the dental field for both practitioners as well as patients.

### BRIEF DESCRIPTION OF THE DRAWINGS

FIG. 1 provides a frontal view of the dental model with an interior view of the oral region and the user interface as well as the sensory output component associated therewith.
FIG. 2 provides a frontal view of the oral region of the dental model with the lips of the model pulled back, exposing the simulated tooth structures, and an embodiment of a dental tool.
FIG. 3 provides a side cross sectional view of an oral region of the dental model with a cheek region removed.
FIG. 4 provides a side perspective view of an embodiment of the dental model with an orbital region, and simulated eye and eyelid portions.
FIG. 5A is a side view of a tube of the tongue of FIG. 5B according to an embodiment of the invention.
FIG. 5B is a side perspective view of a tongue according to an embodiment of the invention.
FIG. 6 provides a side perspective view of an embodiment of the dental model.
FIG. 7 provides a view of a tilting mechanism according to an embodiment of the dental model.
FIG. 8 provides a perspective view of an illustration showing a dental training apparatus in accordance with an additional embodiment of the invention. Fig. 8a shows a view of the prior art. Fig.8b shows the embodiment.

### DETAILED DESCRIPTION

For the purposes of promoting an understanding of the principles and operation of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to those skilled in the art to which the invention pertains.

Disclosed herein are typodont models and dental mannequins that provide a highly accurate representation of the human or non-human animal oral anatomy. The model embodiments disclosed herein provide life-like materials and various features of the oral cavity not found in typical typodont models. Additionally, the typodont models disclosed herein simulate many challenging conditions that arise in dental procedures when performed on live subjects such as, for example, clouding of instruments including mirrors used to view the interior portion of the oral cavity, oral fluid interfering with the work area, and other real-life interferences and complications. The ability to mimic the oral cavity with as much accuracy as possible is beneficial to the dental field for both practitioners as well as patients.

In one embodiment, provided is a dental model configured to anatomically simulate a human or non-human animal oral region that includes a first member and a second member, having a flexibly hinged relationship there between. The first and second member are configured to simulate an upper and a lower human or non-human animal jaw. This embodiment also includes a first and second simulated tooth structure provided on the first member and second member, respectively, the first and second simulated tooth structure being configured to anatomically simulate a human or non-human animal tooth structure. The embodiment also includes a simulated intra-oral soft tissue structure configured to simulate a human or non-human animal intra-oral soft tissue structure, wherein said soft tissue structure is associated with said simulated tooth structure, said intra-oral soft tissue structure comprising at least one of: (a) a simulated vestibule; and (b) a simulated cheek having a model-cheek stretch-resistance configured to simulate a stretch-resistance of a living cheek.

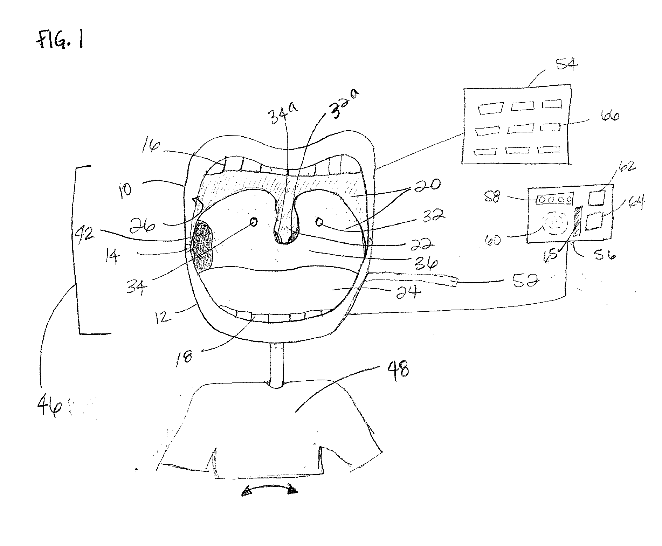

Turning to FIG. 1, shown is a dental model 100 configured to anatomically simulate a human or non-human oral region 46 is provided. The model includes a first member 10 and a second member 12, wherein a flexibly hinged relationship is provided there between. The first and second members 10, 12 are configured to simulate an upper and a lower human or non-human animal jaw. The dental model 100 further includes a first and a second simulated tooth structure 16, 18 provided on the first member 10 and second member 12, respectively. The first and second simulated tooth structures 16, 18 configured to anatomically simulate a human or non-human animal tooth structure. The model 100 further includes a simulated intra-oral soft tissue structure 20 configured to simulate a human or non-human animal intra-oral soft tissue structure, wherein the soft tissue structure 20 is associated with the simulated tooth structures 16, 18. The dental model 100 includes simulated cheek and lip structures which anatomically and functionally mimic the cheeks and lips of a human or non-human animal.

In a further embodiment, the simulated intra-oral soft tissue structure 20 includes a simulated inner cheek region 26 configured to simulate a human or non-human inner cheek region, and a simulated gingival structure 28 associated with the first and/or second simulated tooth structure 16, 18, said simulated gingival structure 28 configured to simulate a human or non-human gingiva, and wherein a simulated vestibule 30 is disposed between the simulated gingival structure 28 and the simulated inner cheek region 26.

In another embodiment, the simulated intra-oral soft tissue structure 20 includes a silicone based material, wherein the material provides resilience and a shape similar to a human or non-human animal soft tissue. Any other material known in the art to simulate human or non-human animal soft tissue is contemplated within the disclosure herein.

For example, certain prior art mannequins have cheeks composed of an unrealistically stretchy, thin membrane that fails to simulate the difficulty of working in the cramped conditions of the mouth of a living patient, because the membrane can allow a dental student to stretch the model cheek far beyond what would be possible in an actual patient. The present invention solves this problem by providing a cheek composed of material having stretch-resistance similar to that of a living cheek.

In yet another embodiment, the dental model 100 further includes a throat portion 36, and one or more sensors 32, 34 located thereon. The sensors 32, 34 sense a proximity via a proximity sensor 34 and/or a contact via a contact sensor 32, between an object and the throat portion 36 of the dental model 100, and wherein a feedback is provided as a result of the input sensed. The sensors may also be provided in or on different parts of the model 100 including the simulated lip areas, simulated tooth structures, and simulated tongue, among other components.

In a further embodiment, the dental model 100 includes a sensory output component 56, and wherein the feedback of the model comprises audio feedback 60, visual feedback 58, olfactory feedback 62, gustatory feedback 64, or tactile feedback 65, or any combination thereof.

In yet a further embodiment, the dental model 100 is provided wherein a feedback is initiated if a sensor of the dental model 100 is contacted by an object, wherein the feedback simulates a reflex of a human or non-human animal. The object includes but is not limited to a dental tool or a hand of a user. A pharyngeal reflex (or laryngeal spasm) often occurs when an object comes in contact with the back of the throat, roof of the mouth, back of the tongue, or tonsil area of a patient. This reaction or reflex can be replicated in the dental model 100 by providing sensors in these aforementioned areas. When an object comes in contact with a sensor in any of these areas of the dental model 100, a signal can be sent to initiate feedback of the dental model 100. The feedback may be any type of feedback described herein or known in the art including, auditory, visual, tactile, olfactory, and/or gustatory feedback.

Signal outputs are used herein by the device to communicate with and provide feedback to the user. In one embodiment, the signal output device generates a visual output including at least one light or screen display, or a combination thereof. The visual stimulation or feedback may include visual output such as an LED and/or an LCD display, for example. The display may provide information to the user about the training or simulation and about the device. It may also provide information about the user's condition or any other type of information useful for the user. Other types of visual feedback known the art are contemplated within the invention herein.

The signal output component of the device may generate an audio output, wherein the audio output may include a sound or a series of sounds. The audio output or feedback may include a beeping sound, an audible instruction or an audible message, musical feedback, or any other type of audio output as known to those of skill in the art. In one embodiment, the device is provided wherein a speaker is associated with the device for transmitting the audio output from the device. The speaker may be attached to the device, or the speaker may be wired or wirelessly connected to the device.

In another embodiment either olfactory (smellant) or gustatory (taste) feedback may be provided as a signal output from the device. The olfactory and gustatory feedback may be presented in combination with one another or may be in combination with any of the other signal outputs described herein to improve learning and training of the user of the device. Furthermore, in some embodiments, the olfactory and/or gustatory feedback may be used to simulate the olfactory and/or gustatory output received from a human or non-human dental patient.

Other types of output or feedback provided by the device may include tactile output or feedback such as temperature change or vibration of the device, for example. Examples of tactile output can be found in US Pat. No. 8,138,896, which is incorporated herein by reference. Many of the visual, auditory, and tactile outputs described herein are not necessarily only feedback to the user of the device, but can be prompts made by the device to a user to solicit user input or a user action, or to discourage user input or user action.

Any of the abovementioned outputs/feedback by the signal output component can be presented along with any of the other feedback of the device. For example, a visual and an audio feedback may occur at the same time or sequentially to enhance learning of the user of the device.

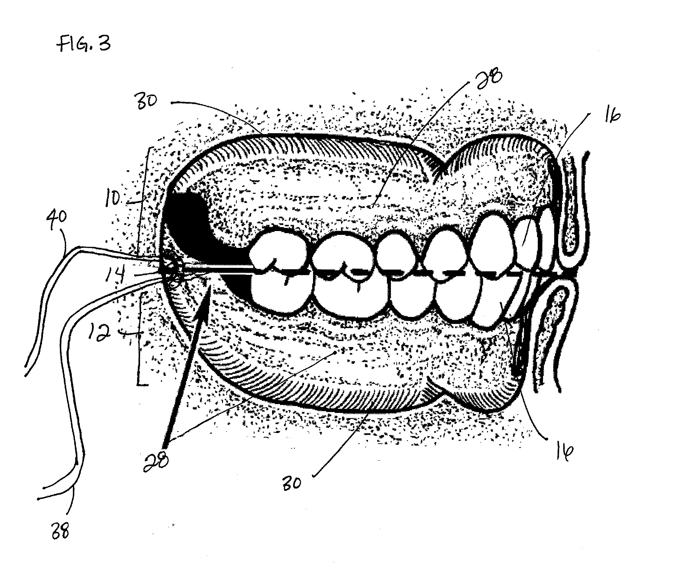

In a further embodiment, as illustrated in FIG. 3, the dental model 100 includes a first conduit 38, wherein a first flow of air is provided to the oral region 46 via the first conduit 38, wherein the first flow of air is configured to simulate a human or non-human animal breath. In yet a further embodiment, a relative humidity value of said first flow of air is equivalent to the relative humidity value of the breath of a human or non-human animal.

In another embodiment, the dental model 100 includes at least one simulated salivary gland 42 configured to simulate a salivary gland of a human or non-human animal. More than one salivary gland 42 may be provided, for example one may be provided on each side of the oral region 46 to mimic the human oral region. In a further embodiment, the at least one simulated salivary gland 42 is configured to provide a fluid secretion to the oral region 46 of the model, so as to simulate human or non-human animal saliva. In some embodiments, the fluid secretion collects in the oral region 46 of the dental model 100 to simulate a pooling of saliva in a human or non-human animal oral region.

In another embodiment, the first and/or second tooth structures 16, 18 of the dental model 100 include anatomical shaped teeth, wherein the teeth comprise a pulp and a canal, and the teeth include a radiolucent material for radiography training. The teeth include special opaque qualities for in-office X-ray training. The teeth may be permanently fixed into the first and/or second members 10, 12, with full pulp and canal.

In another embodiment, the first and second members 10, 12 are pivotally mounted to one another via a bias element 14, such that the first and second members 10, 12 may be biased toward one another such that a radiographic film can be held between the first and second members. In order to simulate the taking of a dental X-ray in a patient, the bias element 14 is one example of a means by which the first and second members 10, 12 can be pressed together such that a bite wing, radiographic film, or other similar object can be held between the first and second members 10, 12 during the simulation of a dental X-ray.

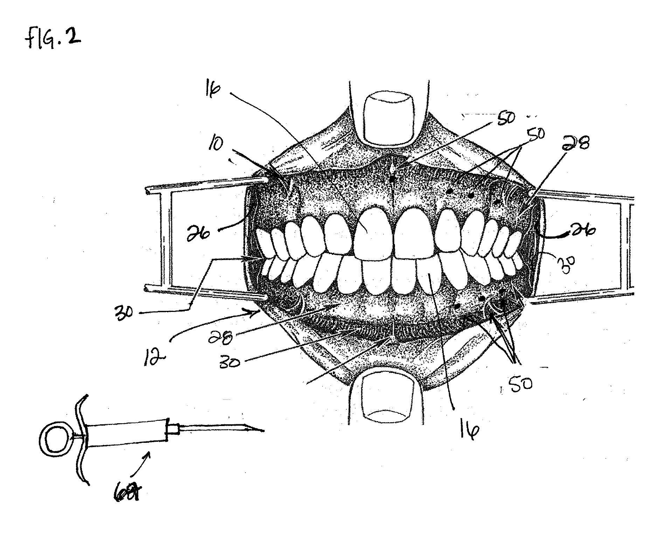

In another embodiment, as provided in FIG. 2 the dental model 100 includes one or more injection points 50, wherein each injection point 50 represents a deposition site for injecting an anesthetic into a simulated dental nerve, wherein the simulated dental nerve is configured to simulate a human or non-human animal dental nerve.

In a further embodiment, the dental model 100 includes a dental tool 67 (FIG. 2) for simulating administration of the anesthetic to the one or more injection points 50 of the dental model.

In a further embodiment, the dental model 100 includes a chest plate 48 removably connected to the dental model 100. The chest plate may be configured to anatomically simulate a male and/or female human or non-human animal chest region to allow a user of the model to practice manipulation of and use of the model around the chest region of a subject or patient.

In a further embodiment, the chest plate 48 includes a first side and a second side, and wherein the first side simulates a male human or non-human animal chest region and the second side simulates a female human or non-human animal chest region, for example.

In another embodiment, the chest plate 48 is pivotally attached to the dental model 100 such that the chest plate 48 can be manually adjusted from the first side to the second side and from the second side to the first side without removing the chest plate 48 from the dental model 100.

In a further embodiment, the dental model 100 includes a simulated tongue 24 configured to anatomically simulate a human or non-human animal tongue, wherein the simulated tongue is movable within the oral region 46. In a further embodiment, the simulated tongue 24 may include an articulating end 52, wherein the end 52 can be manually manipulated to move the simulated tongue 24. In another embodiment, the simulated tongue 24 may be electrically controlled, wherein the simulated tongue 42 moves to simulate the movement of a human or non-human animal tongue.

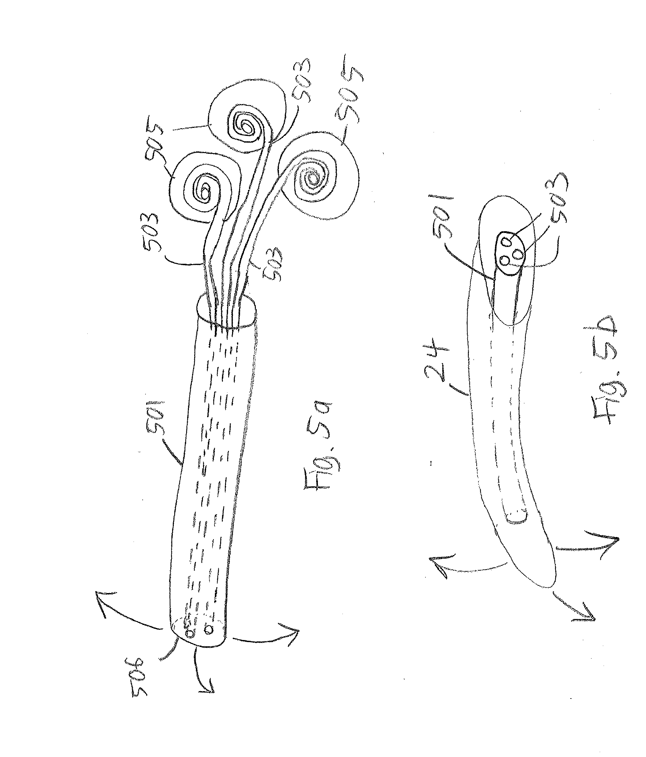

For example, as illustrated in FIGS. 5a and 5b, the tongue 24 can be provided with a flexible tube 501 inside, which contains one or more (typically at least three) flexible members 503 (e.g., cables or flexible rods) attached to the end 506 of the tube 501. Each of the flexible members 503 can be independently pulled or pushed using servo motors 505 to bend the tongue 24 in one or more dimensions - e.g., up and down and/or side to side.

In a further embodiment, provided in FIG. 3, the dental model 100 includes a second conduit 40, wherein the second conduit 40 is provided to deliver a fluid to the oral region 46, and wherein the fluid simulates human or non-human animal saliva.

The dental model 100 may further include one or more motors 72 associated with the model 100, wherein the motor 72 provides movement of the model 100. The movement may include erratic head movement or slight movement of various components of the model to simulate the movement of a human or non-human animal subject. In one example, the motor 72 may be a servo motor which can provide precise control of motor output. The servo motor may be controlled by a microcontroller or other programmable servo driver; alternatively, a manual controller can be used. The motor 72 associated with the dental model 100 is provided to move the dental model 100 during use to simulate the movement of a live human or non-human animal subject or patient, wherein movement of the subject provides challenges to administering dental care similar to the actual movement of a life human or non-human animal subject.

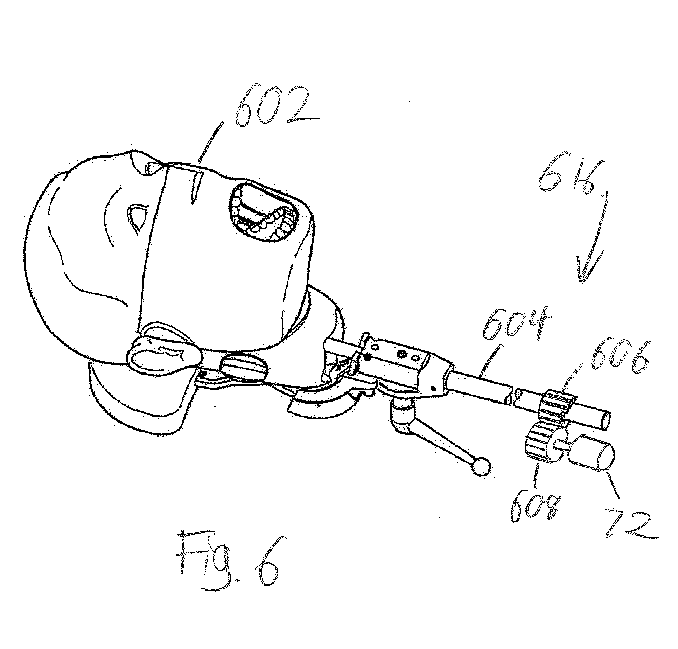

For example, as illustrated in FIG 6, the head 602 can be mounted on a shaft 604 containing a first gear 606 that can be driven by the motor 72 and a second gear 608 to rotate the head 602.

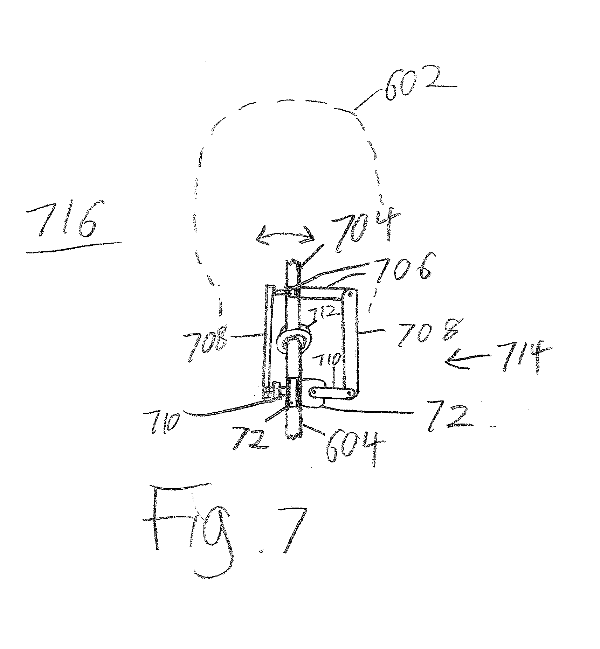

In addition, as illustrated in FIG. 7, forward and backward tilting of the head 602, and/or side-to-side tilting of the head 602, can be provided using a ball joint 712, preferably located in or near the neck region 714 of the model 100. In the illustrated example, one or more servo motors 72 are used to provide tilting motion in two dimensions (forward/backward and side-to-side) by pushing and pulling an upper shaft portion 704 through linkage members 708, 706, and 710. Optionally the model 100 can include either or both of the rotation mechanism 616 illustrated in FIG. 6 and the tilting mechanism 716 illustrated in FIG. 7. Furthermore, while the illustrated examples show the rotation mechanism 616 located on a lower portion of shaft 604 and the tilting mechanism 716 connected to and/or including an upper shaft portion 704 located closer to the top of the head 602, another option (not illustrated) is to put the rotation mechanism 616 above (i.e., closer to the top of the head 602 than) the tilting mechanism 716.

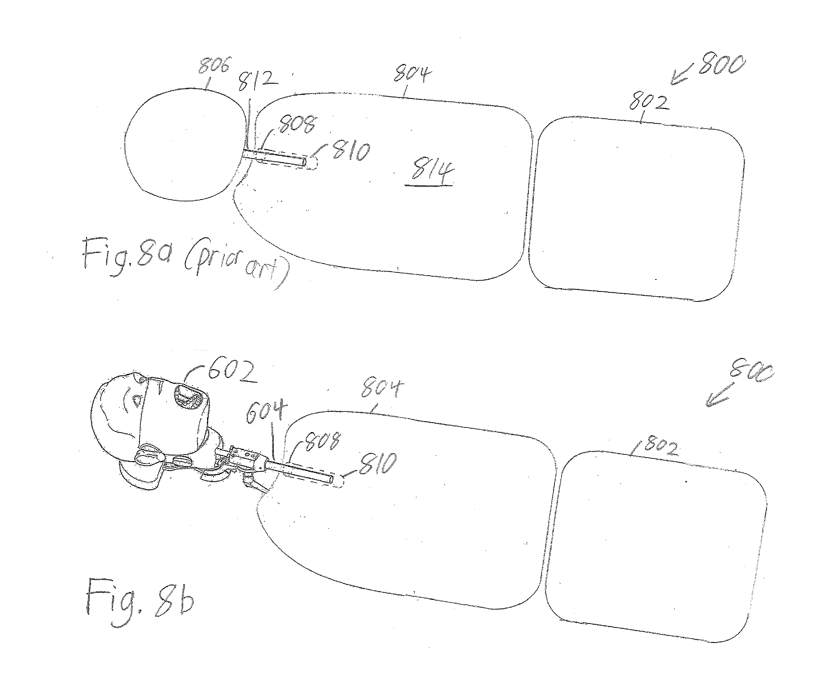

Figs. 8a and 8b illustrate a dental training apparatus in accordance with an additional embodiment of the invention. A typical dental examination chair 800 includes a seat portion 802, a backrest 804, and a headrest 806. The headrest 806 is supported by a shaft (or other support member) 812 that fits into the opening 808 of a socket 810 at the top of the backrest. In accordance with the invention, the headrest 806 can be removed, leaving the socket 810 empty. Then, the support shaft (or head support member) 604 of head portion 602 can be inserted into the opening 808 of the socket 810. Thus, the socket 810 is configured to receive either the support member 812 of the headrest 806 or the support member 604 of the mannequin head portion 602. The head support member 604 can be configured with a shape and dimensions similar to those of the headrest support member 812 so that the headrest 806 and the head portion 602 can be easily swapped. This arrangement provides the convenience of allowing a dental training facility or its students to install the head portion 602 simply and quickly in an existing dental examination chair without any additional equipment.

The inventive system illustrated in Fig. 8b is advantageous over prior art systems in which a mannequin head is connected to a flat plate that must be strapped to the cushion portion 814 of the backrest 804. In particular, since the socket 810 is already strong enough to support the headrest 806, it provides equally strong support for the head portion 602, making belts or straps optional and/or unnecessary in most cases.

In a further embodiment, the simulated intra-oral soft tissue structure 20 includes a uvula structure 22. The uvula structure 22 is associated with an inferior side of the first member 10, wherein the uvula structure 22 is configured to anatomically simulate a uvula of a human or non-human animal. In another embodiment, the uvula structure 22 includes one or more sensors, which may include a contact sensor 32a, configured to detect a contact with the uvula structure 22, or a proximity sensor 34a, configured to detect a proximity between an object and the proximity sensor 34a. The uvula sensors 32a, 34a may provide a feedback based on the input received by the uvula contact and/or proximity sensors 32a, 34a. The sensors located on the uvula structure 22 can also be configured to provide feedback to a user of the model 100 whether or not the user has contacted the uvula structure 22, in essence, "gagged" the patient or caused a pharyngeal reflex. The feedback may be provided as discussed throughout the disclosure herein including but not limited to audio, visual, tactile, olfactory, or gustatory feedback or any combination thereof. Furthermore, the feedback initiated by the signal transmitted from a sensor of the uvula structure 22 may be configured to simulate a "gag" or pharyngeal reflex of a patient.

In still a further embodiment, the feedback provided in response to an input received from one of the contact or proximity sensors 32a, 34a, 32, 34 includes a simulated pharyngeal reflex. This simulated pharyngeal reflex may include a movement of the first and second members 10, 12, the uvula structure 22, and/or the simulated intra-oral soft tissue 20, such that the simulated pharyngeal reflex mimics a pharyngeal reflex of a human or non-human animal.

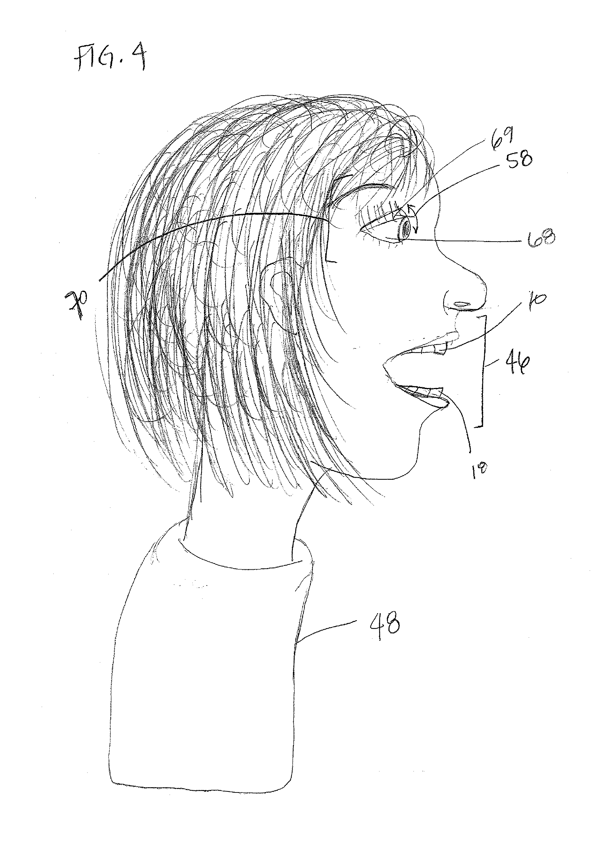

In a further embodiment, illustrated in FIG. 4, the dental model 100 may be provided as a model of a human or non-human animal head including an orbital region 70 with a movable simulated eye 68 having a movable simulated eyelid 69 to anatomically simulate the eyes and eyelids of a human or non-human animal. FIG. 4 provides an example of the dental model 100 including the orbital region 70 having a movable simulated eye 68 and simulated eyelid 69. The movable simulated eye 68 and eyelid 69 can be used to provide visual feedback to a user of the dental model 100. The movement of the simulated eye 68 and eyelid 69 may depend on inputs received by the sensors 32, 32a, 34, 34a. The movable simulated eye 68 and eyelid 69 can be mechanically or electrically operated, however, if electrically operated, the movement may be controlled via sensor input. Using the movable simulated eye 68 and eyelid 69 as feedback in the dental model 100 provides an effective training method, wherein the movement of eyes and eyelids providing feedback in dental patients is typical.

In another embodiment, the dental model includes a user interface 54 associated therewith. In still another embodiment, the user interface 54 includes at least one user input control 66. In yet another embodiment, the dental model 100 includes a sensory output component 56 associated therewith, configured to provide feedback to a user. The feedback discussed herein is not only a result of an action or inaction by the user of the model 100, but may also be used to initiate an input from the user. The feedback may be provided in the form of audio, visual, tactile, olfactory, and/or gustatory feedback, or any other means of feedback known to those of skill in the art. FIG. 1 provides some examples of auditory feedback 60 which is embodied as a speaker, and visual feedback 58 shown as an LED, however the auditory and visual feedback are not limited to a speaker and an LED, but may be provided in any manner known to those of skill in the art. Additionally, while the sensory output components 56 are shown in FIG. 1 as being associated with but not disposed on the dental model 100, they may also be provided on or in the dental model 100.

It is to be noted that the terms "first," "second," and the like as used herein do not denote any order, quantity, or importance, but rather are used to distinguish one element from another. The terms "a" and "an" do not denote a limitation of quantity, but rather denote the presence of at least one of the referenced item. The modifier "about" used in connection with a quantity is inclusive of the stated value and has the meaning dictated by the context (e.g., includes the degree of error associated with measurement of the particular quantity). It is to be noted that all ranges disclosed within this specification are inclusive and are independently combinable.

The models of the subject invention can, but need not, be characterized by a similarity of geometry, of individual component physical properties, and of component-to-component interfacial properties with living tissue. For example, in some cases, it may be desirable for the model 100 to have a symmetrical appearance. In other cases, it may be desirable for some or all of the anatomical features to be asymmetrical to better simulate the asymmetry often exhibited by real people or animals. On the simplest level, individual model components are fabricated such that they mimic the geometry of a particular target anatomy. The term "anatomically" as used herein includes a component having a geometric, functional, and/or physical property of the live tissue or organ.

The individual components of the subject invention are assembled in such a way that the interaction between adjacent components yields the overall interaction expected in the actual target tissue. That is, the interfacial properties (bond strength, component-to-component friction, etc) between the various model components are designed to simulate the interaction between the relevant tissues in the target anatomy.

As used herein, the terms "subject" and "patient" are used interchangeably. As used herein, the term "subject" refers to an animal, preferably a mammal such as a non-primate (e.g., cows, pigs, horses, cats, dogs, rats etc.) and a primate (e.g., monkey and human), and most preferably a human.

It is important to an understanding of the present invention to note that all technical and scientific terms used herein, unless defined herein, are intended to have the same meaning as commonly understood by one of ordinary skill in the art. The techniques employed herein are also those that are known to one of ordinary skill in the art, unless stated otherwise.

While a number of embodiments of the present invention have been shown and described herein in the present context, such embodiments are provided by way of example only, and not of limitation. Numerous variations, changes and substitutions will occur to those of skill in the art without materially departing from the invention herein. For example, the present invention need not be limited to best mode disclosed herein, since other applications can equally benefit from the teachings of the present invention. Also, in the claims, means-plus-function and step-plus-function clauses are intended to cover the structures and acts, respectively, described herein as performing the recited function and not only structural equivalents or act equivalents, but also equivalent structures or equivalent acts, respectively. Accordingly, all such modifications are intended to be included within the scope of this invention as defined in the following claims, in accordance with relevant law as to their interpretation.

## Claims

1. A dental model configured to anatomically simulate a human or non-human animal oral region, said model comprising:
a first member and a second member, comprising a flexibly hinged relationship there between, said first and second member configured to simulate an upper and a lower human or non-human animal jaw;
a first and second simulated tooth structure provided on said first member and second member, respectively, said first and second simulated tooth structure configured to anatomically simulate a human or non-human animal tooth structure; and
a simulated intra-oral soft tissue structure configured to simulate a human or non-human animal intra-oral soft tissue structure, wherein said soft tissue structure is associated with said simulated tooth structure, said intra-oral soft tissue structure comprising at least one of: (a) a simulated vestibule; and (b) a simulated cheek having a model-cheek stretch-resistance configured to simulate a stretch-resistance of a living cheek.

2. The dental model of claim 1, wherein the simulated intra-oral soft tissue structure further comprises a simulated inner cheek region configured to simulate a human or non-human animal inner cheek region, and a simulated gingiva associated with at least one of the first and second simulated tooth structure, said simulated gingiva configured to simulate a human or non-human animal gingiva, and wherein the simulated vestibule is disposed between the simulated gingiva and the simulated inner cheek region.

3. The dental model of claim 1 or 2, wherein the simulated intra-oral soft tissue structure comprises a silicone based material, wherein said material provides resilience and a shape similar to a human or non-human animal soft tissue.

4. The dental model of any of the previous claims, further comprising a throat portion, and one or more sensors located thereon, wherein the sensors are configured to sense at least one of a proximity and a contact between an object and the throat portion of the dental model, and wherein the model is configured to provide a feedback as a result of the input sensed.

5. The dental model of any of the previous claims, further comprising a first conduit configured to provide a first flow of air to the oral region via the first conduit, wherein the first flow of air is configured to simulate a human or non-human animal breath.

6. The dental model of any of the previous claims, further comprising at least one simulated salivary gland configured to simulate a salivary gland of a human or non-human animal.

7. The dental model of any of the previous claims, wherein said first and/or second tooth structures comprise anatomical shaped teeth, wherein said teeth comprise a pulp and a canal, said teeth comprise an at least partially radiolucent material for radiography training.

8. The dental model of any of the previous claims, wherein said first and second members are pivotally mounted to one another via a bias element, such that the first and second members may be biased toward one another such that a radiographic film can be held between the first and second members.

9. The dental model of any of the previous claims, further comprising one or more injection points, wherein each injection point represents a deposition site for injecting an anesthetic into a simulated dental nerve, wherein the simulated dental nerve is configured to simulate a human or non-human animal dental nerve.

10. The dental model of any of the previous claims, further comprising a chest plate removably connected to the dental model.

11. The dental model of any of the previous claims, further comprising a chest plate, the chest plate comprising a first side and a second side, wherein the first side is configured to simulate a male human or non-human animal chest region and the second side is configured to simulate a female human or non-human animal chest region, and wherein the chest plate is pivotally attached to the dental model such that the chest plate can be manually adjusted from the first side to the second side and from the second side to the first side.

12. The dental model of any of the previous claims, further comprising a simulated tongue configured to anatomically simulate a human or non-human animal tongue, and wherein said simulated tongue is movable within the oral region.

13. The dental model of claim 12, wherein the simulated tongue is pneumatically controlled, and wherein said simulated tongue is configured to move in a manner resembling the movement of a human or non-human animal tongue.

14. The dental model of any of the previous claims, further comprising a second conduit, wherein said second conduit is configured to deliver a fluid to the oral region, wherein said fluid simulates human or non-human animal saliva.

15. The dental model of any of the previous claims, wherein the simulated intra-oral soft tissue comprises a uvula structure, said uvula structure associated with an inferior side of the first member, wherein the uvula structure is configured to anatomically simulate a uvula of a human or non-human animal.

16. The dental model of any of the previous claims, further comprising a user interface associated therewith.

17. A dental model configured to anatomically simulate a human or non-human animal oral region, said model comprising:
a first member and a second member, comprising a flexibly hinged relationship there between, said first and second member configured to simulate an upper and a lower human or non-human animal jaw;
a first and second simulated tooth structure provided on said first member and second member, respectively, said first and second simulated tooth structure configured to anatomically simulate a human or non-human animal tooth structure;
a simulated intra-oral soft tissue structure configured to simulate a human or non-human animal intra-oral soft tissue structure, wherein said soft tissue structure is associated with said simulated tooth structure; and
a first conduit configured to provide a first flow of air is provided to the oral region via the first conduit, wherein the first flow of air is configured to simulate a human or non-human animal breath.

18. The dental model of claim 17, wherein the a relative humidity value of said first flow of air is substantially equivalent to a relative humidity value of breath of a human or non-human animal.

19. A dental training apparatus, comprising:
a dental examination chair including a backrest portion, the backrest portion having a socket configured to receive a headrest support member; and
a head portion configured to anatomically simulate a human or non-human animal head, the head portion including a head support member, the head support member configured to fit into the socket.
